# EUROPÄISCHE PATENTANMELDUNG

(11) **EP 1 521 014 A1**
(43) Veröffentlichungstag der Anmeldung: **06.04.2005**
(21) Anmeldenummer: 04009356.9
(22) Anmeldetag: 07.04.2004
(51) Int. Cl.: F16G 11/10

(54) **Lösbare Seilklemme**

(30) Priorität: 30.09.2003 EP 03021970
(71) Anmelder: Slot, Albert, 49846 Hoogstede (DE)
(72) Erfinder: Slot, Albert, 49846 Hoogstede (DE)

(57) **Zusammenfassung**

Lösbare Seilklemme, bestehend aus einer mittels eines Aufhängeringes (3) fixierbaren Zugstange (9), an der über einen Gelenkbolzen (8) ein zweiarmiger Schwenkhebel (7) mit unterschiedlich langen Hebelarmen drehbar befestigt ist, an deren Enden und zwischen dem Aufhängering (3) und der Zugstange (9) jeweils eine Öse (4,5,6) für das durchziehende Seil (2) angebracht ist. Wobei der rechte Hebelarm des Schwenkhebels (7) um soviel kürzer ist als die Zugstange (9), dass sich das Seil (2) unter Bildung eines S-Schlages zwischen der mittleren Öse (5) und der rechten Öse (6) verklemmt, solange an dem linken Seilende (13) gezogen wird. Diese Klemmung wird aufgehoben, wenn die rechte Öse (6) von der mittleren Öse (5) weg bewegt wird, was durch betätigen einer der Betätigungsgriffe (11,12) in die entsprechende Richtung hervorgerufen werden kann. Das Seil (2) kann durch die Ösen (4,5,6) durchgezogen werden, wenn an dem rechten Seilende (14) gezogen wird, da ein Begrenzungsanschlag (10) einen analogen S-Schlag im Gegensinn verhindert.

## Beschreibung

Die Erfindung betrifft eine lösbare Seilklemme, die in der einen Zugrichtung des Seiles klemmt, und in der anderen Zugrichtung das Seil durchlaufen läßt. Lösbare Seilklemmen sollten einfach zu bedienen, robust, wartungsfrei, kompakt, geringes Gewicht, leicht transportierbar und für unterschiedliche Seilarten (Kunststofffaser, Naturfaser, gedreht, gekochten ...) und Seildurchmesser geeignet sein.

Es gibt verschiedene Vorrichtungen, die das Durchziehen des Seiles in eine Richtung erlauben, und in die andere Richtung sperren. Bei allen herkömmlichen Seilklemmen wird mit unterschiedlich stark ausgeprägten Verzahnungen gearbeitet, was jedoch leicht zur Beschädigung des Seiles führt.

Weitere Seilklemmen sind unter
DE-PS 1 047 403
US 3 233 934
DE 37 22 280 C2
DE 91 06 666 U1
DE 25 51 486 A1 beschrieben.

Aufgabe der Erfindung ist es, eine einfache, robuste, wartungsfreie, kompakte, leichte und leicht transportierbare Seilklemme zu schaffen, die für unterschiedliche Seilstärken und Seilarten geeignet ist, und die bei jeglicher Zugbelastung ohne großen Kraftaufwand lösbar ist.
Diese Aufgabe wird durch eine Lösbare Seilklemme mit den Merkmalen des Anspruchs 1 gelöst.

Die Vorrichtung ist extrem einfach zu bedienen, Bedienungsfehler sind nahezu ausgeschlossen.
Die Vorrichtung ist extrem robust, ist auch durch Zuführung von Kräften, die die Zugkraft des Seiles mit dem maximalen Durchmesser um ein vielfaches überschreiten nicht in der Funktion zu beeinträchtigen oder gar zu beschädigen. Die Vorrichtung ist absolut wartungsfrei und auch nach langer unsachgemäßer Lagerung noch funktionstüchtig.
Die Vorrichtung ist für die Kraftverhältnisse extrem kompakt und leicht.
Die Vorrichtung ist sehr einfach transportierbar. Die Vorrichtung weist keine Verzahnung zum Halten des Seiles auf, da alle Stellen, mit dem das Seil in Berührung kommt, keine Rauheit aufweisen. Alle Ecken, mit denen das Seil in Berührung kommt, sind abgerundet, wodurch das Seil keiner übermäßigen Abnutzung ausgeliefert ist.

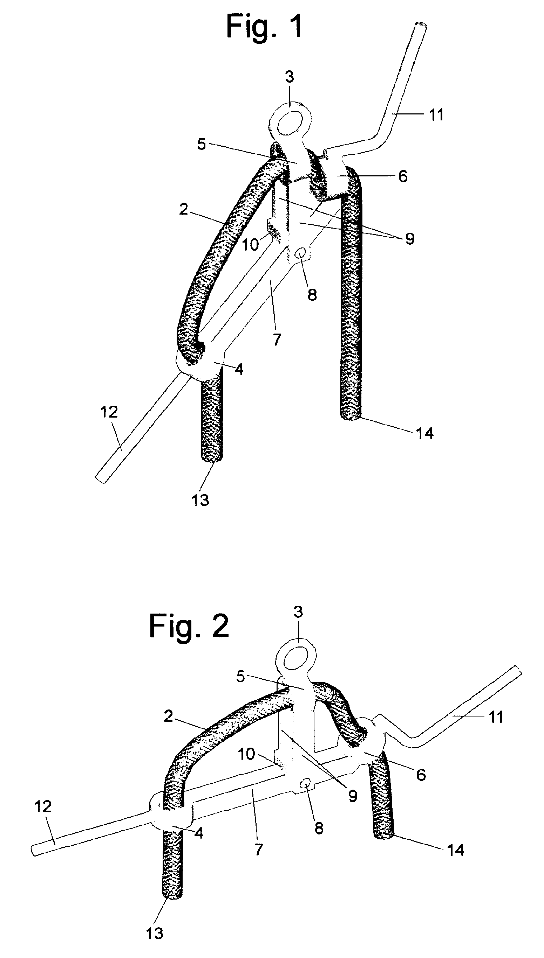

Die Erfindung ist in der Fig. 1 und Fig. 2 dargestellt und wird im Folgenden näher beschrieben.

Die lösbare Seilklemme wird mittels eines angemessen starken Aufhängeringes (3), der mit der gesamten Vorrichtung über die Öse (5) fest verbunden ist, an einem festen Punkt fixiert.
Anschließend fädelt man ein Seil (2) durch die drei Ösen (4, 5, 6).
Wird auf das rechte Seilende (14) Zug ausgeübt, so gleitet das Seil (2) mühelos durch die Ösen (4, 5, 6) hindurch (Fig 2).
Dies wird erreicht, weil die Ösen (4, 5, 6) eine optimale Stellung zum Durchgleiten des Seiles (2) zueinander haben. Diese optimale Stellung wird durch die geometrische Lage der einzelnen Ösen (4, 5, 6), zueinander erreicht, wobei die linke Öse (4) und die rechte Öse (6) durch den Schwenkhebel (7) fest miteinander verbunden sind. Die mittlere Öse (5), welche mit der Zugstange (9) fest verbunden ist, ist über den Gelenkbolzen (8) beweglich zum Schwenkhebel (7), und damit auch mit den Ösen (4 und 6) verbunden. Wird am rechten Seilende (14) Zug ausgeübt, so werden die Ösen (4 und 6), wegen der leichten Reibung die vorhanden ist, mit in die Richtung des Seiles (2) bewegt, was bewirkt, dass die Zugstange (7), bedingt durch den Drehpunkt um den Gelenkbolzen (8), an den Begrenzungsanschlag (10) anschlägt, und in dieser Position gehalten wird, solange am rechten Seilende (14) und damit an den Ösen (4 und 6) Zug ausgeübt wird. Zum Durchziehen des Seiles (2), wie vorstehend beschrieben, ist es belanglos, in welchem Winkel gegenüber der Vorrichtung am Seilende (14) Zug ausgeübt wird (Fig. 2).

Wird am linken Seilende (13) Zug ausgeübt, so werden die Ösen (4 und 6) wegen der Reibung mit in die Richtung des Seiles (2) bewegt, was bewirkt, dass sich der Schwenkhebel (7) gegen den Uhrzeigersinn um den Gelenkbolzen (8) dreht, wodurch das Seil (2) zwischen den Ösen (5 und 6) eingeklemmt wird. Dies wird dadurch erreicht, weil die Ösen (4, 5, 6), eine optimale Stellung zum Klemmen des Seiles (2) zwischen den Ösen (5 und 6) zueinander haben, wenn am linken Seilende (13) Zug ausgeübt wird. Diese optimale Stellung wird durch die geometrische Lage der einzelnen Ösen (4, 5, 6) zueinander erreicht, dass heißt durch das Längenverhältnis ihrer Hebelarme, wobei die linke Öse (4) und die rechte Öse (6) durch den Schwenkhebel (7) fest miteinander verbunden sind. Die mittlere Öse (5), welche mit der Zugstange (9) fest verbunden ist, ist über den Gelenkbolzen (8) beweglich mit dem Schwenkhebel (7), und damit auch mit den Ösen (4 und 6) verbunden. Je stärker die Zugbelastung am linken Seilende (13) ist, desto stärker wird das Seil zwischen den zueinander versetzten Ösen (5 und 6) in Form eines S-Schlages eingeklemmt. Dies führt dazu, dass das Seil (2) bei jeder Zugbelastung am linken Seilende (13) sicher gesperrt wird. Zum Klemmen des Seiles (2), wie vorstehend beschrieben, ist es belanglos in welchem Winkel gegenüber der Vorrichtung am Seilende (13) Zug ausgeübt wird (Fig 1).
Wird bei gesperrtem Seil (2) (Fig 1) die rechte Öse (6) von der mittleren Öse (5) weg bewegt, so wird die Klemmwirkung aufgehoben. Dies funktioniert selbst bei stärkster Zugbelastung am linken Seilende (13), indem eine angemessene Kraft auf den rechten Betätigungsgriff (11) weg von der mittleren Öse (5), oder eine angemessene Kraft auf den linken Betätigungsgriff (12) in Richtung der mittleren Öse (5), aufgebracht wird.
Mit der Vorrichtung können alle Arten von Seilen, bis zum minimalen Durchmesser, der bei 30 % des inneren Ösendurchmessers liegt, sicher geklemmt werden.

## Patentansprüche

1. Lösbare Seilklemme, bestehend aus einer mittels eines Aufhängeringes (3) fixierbaren Zugstange (9), an der über einen Gelenkbolzen (8) ein zweiarmiger Schwenkhebel (7) mit unterschiedlich langen Hebelarmen drehbar befestigt ist, an deren Enden und zwischen dem Aufhängering (3) und der Zugstange (9) jeweils eine Öse (4, 5, 6) für das durchzuziehende Seil (2) angebracht ist, wobei der rechte Hebelarm des Schwenkhebels (7) um soviel kürzer ist als die Zugstange (9), dass sich das Seil (2) unter Bildung eines S-Schlages zwischen der mittleren Öse (5) und der rechten Öse (6) verklemmt, solange an dem linken Seilende (13) gezogen wird, und diese Klemmung aufgehoben wird und das Seil (2) durchgezogen werden kann, wenn an dem rechten Seilende (14) gezogen wird, da ein Begrenzungsanschlag (10) einen analogen S-Schlag im Gegensinn verhindert.

2. Lösbare Seilklemme nach Anspruch 1,
**dadurch gekennzeichnet, dass** die Ösen (4, 5, 6) an geeigneter Stelle einen schrägen Schlitz zum Einführen eines Seiles (2) aufweisen, welche das Durchfädeln des Seiles durch die Ösen (4, 5, 6) erübrigt.

3. Lösbare Seilklemme Vorrichtung nach einem der vorherigen Ansprüche,
**dadurch gekennzeichnet, dass** die Ösen (4, 5, 6) an geeigneten Stellen gelagerte Rollen aufweisen, die das Seil (2) noch leichter Gleiten lassen.

4. Lösbare Seilklemme nach einem der vorherigen Ansprüche,
**dadurch gekennzeichnet, dass** der Gelenkbolzen (8) an beiden Seiten der Zugstange (9) herausragt, um bei geklemmter Seilklemme (Fig. 1), das rechte Seilende (14) darauf aufzuwickeln.

5. Lösbare Seilklemme nach einem der vorherigen Ansprüche,
**dadurch gekennzeichnet, dass** an den beiden Enden des Schwenkhebels (7) Betätigungsgriffe (11,12) angebracht sind.
